# EUROPÄISCHE PATENTSCHRIFT

(11) **EP 0 737 091 B1**
(45) Veröffentlichungstag und Bekanntmachung des Hinweises auf die Patenterteilung: **07.11.2001**
(21) Anmeldenummer: 95905028.7
(22) Anmeldetag: 30.12.1994
(51) Int. Cl.: B01D 29/01, B01D 29/07, B01D 29/11, B01D 29/21, B01D 29/33

(54) **FILTEREINSATZ UND VERFAHREN ZU DESSEN HERSTELLUNG**
FILTER INSERT AND PROCESS FOR PRODUCING THE SAME
CARTOUCHE DE FILTRE ET SON PROCEDE DE PRODUCTION

(30) Priorität: 30.12.1993 DE 4345121; 21.12.1994 DE 4447365
(43) Veröffentlichungstag der Anmeldung: 16.10.1996
(73) Patentinhaber: JACOBI Systemtechnik GmbH, 01474 Weissig bei Dresden (DE)
(72) Erfinder: KÄHLER, Kai, D-20355 Hamburg (DE)
(74) Vertreter: Meissner, Bolte & Partner
(86) Internationale Anmeldenummer: DE9401558
(87) Internationale Veröffentlichungsnummer: WO9517943

(56) Entgegenhaltungen:
- EP-A- 0 382 330
- DE-A- 4 038 966

## Beschreibung

Die Erfindung betrifft einen Filtereinsatz nach dem Oberbegriff des Anspruchs 1 sowie ein Verfahren zur Herstellung eines solchen.

Filtereinsätze der im Oberbegriff des Anspruchs 1 spezifizierten Art dienen dazu, Verunreinigungen aus einem durch ein Filter hindurchströmenden Fluid (insbesondere Luft oder technischen Gasen, grundsätzlich aber auch Flüssigkeiten) abzuscheiden. In Luftfiltern werden gegenwärtig überwiegend Filterelemente verwendet, welche aus einem Mikro-Faservlies, insbesondere aus Glasfasern, bestehen.

Um die effektive Filterfläche gegenüber der Anströmfläche des ein Filterelement oder einen Filterbereich bildenden Luftfilters zu vergrößern, ist das Filtermedium zickzackförmig gefaltet, so daß eine Anzahl von über Faltenkanten aneinander anschließenden Falten entsteht, welche in einem spitzen Winkel zu den Wandungen der Faltung und dabei quer zur Richtung der Faltenkanten von dem zu reinigenden Medium durchströmt werden.

Durch die Materialablagerung - insbesondere auch die Ablagerung größerer Partikel - an der Anströmseite des Filters, Wirbelbildungen im anströmenden Fluid, geringfügige Unregelmäßigkeiten der Faltung usw. kommt es beim Durchströmen des Filters zu Inhomogenitäten der Fluidströmung, die die Faltenanordnung einer starken mechanischen Wechselbelastung aussetzen und eine Deformation der Faltenanordnung bewirken können.

Um die Falten in definiertem Abstand voneinander zu halten und die Faltenanordnung des Filtereinsatzes mechanisch zu stabilisieren, werden die Falten daher beispielsweise - wie etwa in US 3,531,920 oder in einer speziellen Weiterbildung einer näanderfärmiger Faltung in DE 41 26 126 A1 beschrieben - derart mit aus der Ebene der Faltenwände hervorstehenden Vorsprüngen versehen, daß die Vorsprünge einander benachbarter Faltenwände aneinander anliegen und die Faltenwände gegeneinander abstützen. Bei der DE 41 26 126 A1 wird zusätlich durch einen Klebstoffauftrag die Stabilität erhöht. Diese Anordnungen sind für Filtereinsätze bis etwa 100 mm Faltenhöhe bei relativ dichter Faltenpackung bewährt. Jenseits dieser Faltenhöhe und bei größerem Faltenabstand wird die erforderliche Prägetiefe jedoch so groß, daß bei den üblichen Filtermaterialien die Gefahr von Durchprägungen besteht und damit die Ausschußquote in nicht hinnehmbarer Weise ansteigen würde.

Aus DE 40 38 966 ist es auch bekannt, separate Abstandshalter mit gleicher Funktion auf die Faltenwände aufzusetzen bzw. in diese einzufügen. Die Abstandshalter können - wie in der vorgenannten Druckschrift als eine Möglichkeit erwähnt oder auch in DE 30 37 019 A1 ausgeführt - Klebstoffaggregate, insbesondere in Fadenform, sein. Diese haben neben der abstandshaltenden zusätzlich eine die Faltenwände verbindende Wirkung und erhöhen somit die Steifigkeit des Filtereinsatzes zusätzlich.

Der Klebstoffauftrag erfolgt vor dem Falten des Filtermaterials auf die ebene Bahn, und die Verklebung der Faltenwände erfolgt durch den Kontakt der Klebstoffäden miteinander beim Zusammenfalten. Diese Lösung ist daher nur für sehr dichte Faltenpackungen geeignet. Zudem haben die auf diese weise gebildeten Faltenlagen eher mäanderförmige Querschnittsgestalt, was nicht oiptimale Strömugseigenschaften zur Folge hat.

In DE 39 03 730 Al bzw. EP 0 382 330 A1 ist beschrieben, daß ein die Faltenlagen miteinander verbindender und stabilisierender Klebstoffaden, der nach der Faltung auf den Kantenbereich aufgetragen werden kann, mit Prägungen in den Faltenwänden kombiniert ist. Diese Lösung ergibt mechanisch sehr stabile Filtereinsätze, ist jedoch hinsichtlich der erreichbaren Faltenhöhe und des Faltenabstandes im wesentlichen den gleichen Beschränkungen unterworfen wie die Lösungen ohne Klebstoffauftrag.

In DE 42 06 407 ist beschrieben, daß der Faltenkantenbereich einer bereits gefalteten Filtermaterialbahn mit einem feinen Gespinst von Klebstoffäden überzogen wird, um die Falten miteinander zu verbinden und den Filtereinsatz zu stabiliseren. Auch diese Lösung ist für größere Faltenabstände nicht mehr praktikabel, da das feine Klebstoffgespinst keine hinreichend stabile Verbindung weiter auseinanderliegender Faltenkanten herstellen kann und die Gespinstfäden (insbesondere bei Auftrag von unten auf eine im Fertigungsprozeß obenliegende Faltenbahn) "durchhängen" und keine definierte Lage zu den Faltenkanten mehr einnehmen.

Aus EP 0 377 419 A1 iat eine Anordnung bekannt, bei der durch im Scheitel- sowie im Sohlenbereich einer zu bildenden Faltenwandanordnung lokalisierte Klebstoffaggregate unterschiedlicher Größe (im Scheitelbereich größer, im Sohlenbereich kleiner) die Verklebung von Faltenwänden in einer Weise realisiert werden kann, daß ein annähernd dreieckiger Faltenquerschnitt entsteht. Größere Faltenabstände und damit auch -höhen sind jedoch auf diese Weise nicht realisierbar, weil dafür sehr voluminöse Klebstoffaggregate erforderlich wären, die die wirksame Filterfläche stark verringern würden.

Der Erfindung liegt daher die Aufgabe zugrunde, einen Filtereinsatz der gattungsgemäßen Art, der von seinem Aufbau her die Realisierung von Filtereinsätzen mit großer Höhe und/oder großem Faltenabstand ermöglicht, sowie ein Verfahren zur Herstellung dieses Filtereinsatzes anzugeben.

Diese Aufgabe wird durch einen Filtereinsatz mit den Merkmalen des Anspruchs 1 bzw. ein Verfahren mit den Merkmalen des Anspruchs 9 gelöst.

Die Erfindung schließt den Gedanken ein, die bei großem Faltenabstand bzw. großer Faltenhöhe (mit dadurch zwangsläufig vorhandenen Bereichen mit großem Faltenabstand) benötigte große Höhe der Abstandshalter zwischen den Falten durch eine Kombination von in das Filtermaterial eingeprägten und separaten, auf das Filtermaterial aufgebrachten Abstandshaltern zu realisieren. Dies erfordert bei Anwendung des - als solchen bekannten - Klebstoffauftrages, daß dieser eine nennenswerte Dicke bzw. Höhe haben muß, und es bedeutet weiter, daß die Höhe des separaten Abstandshalters über die Länge einer Faltenwand - d.h. von deren Sohle bzw. der "Faltenspitze" bis zum Faltengipfel - nicht konstant sein sollte.

Dies ist insbesondere dadurch realisierbar, daß die separaten Abstandshalter gleichsinnig mit der Querschnittsverengung der betreffenden Falte in Richtung auf die "Faltenspitze" hin kontinuierlich dünner werden.

Bei einer weiteren Ausgestaltung kann auch ausschließlich in den Bereichen, in denen die Faltenwände großen Abstand aufweisen, ein aufgetragener (Klebstoff-)Abstandshalter vorgesehen sein, während in den engeren Bereichen der Faltenwandungen kein Abstandshalter vorhanden ist.

Die Abstandshalter können in ihrer Gesamthöhe zum einen so aufgebaut sein, daß die Höhe der im Material eingeprägten Vertiefungen bzw. Erhebungen in Richtung ihrer Längserstreckung im wesentlichen konstant ist, d.h. die gemäß der Zickzackform des Faltenquerschnitts erforderliche Höhenänderung ausschließlich aus der Dickenänderung des separaten Abstandshalters (der aufgetragenen Schicht) resultiert. Hierbei kann das Filtermaterial beispielsweise mit einer im wesentlichen durchgehenden Rillierung versehen sein.

Zum anderen kann der Aufbau aber auch derart sein, daß die Höhe der Vertiefungen bzw. Erhebungen in zwei Faltenwänden, die gegeneinander abgestützt sind, in Richtung auf die diese Faltenwände miteinander verbindende Faltenkante hin abnimmt. Damit tragen sowohl die Einprägungen als auch die aufgetragenen Abstandshalter zur Realisierung der Abstandsänderung bei.

Die genannten Ausgestaltungen sind sowohl für Filtereinsätze geeignet, bei denen die Faltung einen Körper von der Gestalt eines Quaders aufspannt, also etwa für den Einsatz als Luft- bzw. Gasfilter in der Erdgas- und Erdölindustrie, der Energiewirtschaft oder für Lüftungs- und Klimaanlagen. Sie sind aber ebenso für zylindrische Filtereinsätze geeignet, bei denen die Faltung einen Körper von der Gestalt eines Hohlzylinders aufspannt, also etwa für den Einsatz bei Luftfiltern für Kraftfahrzeuge.

In einer vorteilhaften speziellen Ausbildung der in das Filtermaterial eingeprägten Vertiefungen bzw. Erhebungen umfassen diese - in Richtung ihrer Längserstreckung aufeinanderfolgend - einen ersten Abschnitt mit zunehmender Höhe und einen zweiten Abschnitt mit konstanter Höhe.

Das Klebstoffaggregat kann insbesondere eine in Richtung der Längserstreckung der Erhebung verlaufende, den zweiten Teil von deren Länge (d.h. den Teil mit konstanter Höhe) bedeckende und mit zunehmendem Abstand von der Faltenkante bzw. vom ersten Teil der Erhebung zunehmend dicker werdende Klebstoffschicht sein. Gegenüber einem oder auch mehreren nur punktuell aufgebrachten Klebstoffaggregat(en) ist die Verklebung hier stabiler, die Herstellung dieser Ausführung erfordert aber eine präzisere Steuerung des Klebstoffauftrags.

Eine weitere Erhöhung der Stabilität des Filtereinsatzes ist erreichbar, wenn auf der gesamten Länge einander zugewandter Erhebungen eine zusammenhängende Klebstoffschicht vorgesehen ist, wobei diese dann im ersten Teil der Länge eine konstante und gegenüber der Höhe der Erhebungen geringe Dicke und im zweiten Teil der Länge eine mit zunehmendem Abstand der Faltenwände zunehmende Dicke aufweist.

Hinsichtlich der exakten Lokalisierung der Erhebungen bzw. Vertiefungen sind grundsätzlich zwei Möglichkeiten zu unterscheiden:

Zum einen kann der erste Teil der Vertiefungen bzw. Erhebungen jeweils unmittelbar an einer Faltenkante beginnen, wobei seine Höhe dann von dort bis zur maximalen Höhe mit einer Steigung zunimmt, die der Hälfte der Steigung des Wandabstandes entspricht.

Zum anderen können die Vertiefungen bzw. Erhebungen in einem vorbestimmten Abstand (a) von einer Faltenkante beginnen, wobei sie dann einen dritten, zwischen der Faltenkante und oben genannten ersten Teil liegenden, Teil aufweisen, in dem ihre Höhe zunächst stärker als der hälftige Abstand der Faltenwände zunimmt, bis die dem halben Wandabstand entsprechende Höhe erreicht ist. Diese Ausbildung hat den technologischen Vorteil, daß im unmittelbaren Bereich der Faltenkante - die ja ebenfalls durch eine Einprägung in das Filtervlies vorgegeben wird - nicht mehrere Einprägungen vorgenommen werden müssen. Damit verringert sich die Gefahr von Zerstörungen des Filtervlieses an dieser Stelle und somit die Ausschußquote.

Aus Gründen der Stabilität wird man den Faltenwänden jeweils nach beiden Seiten hin gerichtete Vertiefungen bzw. Erhebungen einprägen, so daß die Faltenwände sich beidseitig gegen benachbarte Faltenwände abstützen. Dies ist jedoch nicht zwingend notwendig.

Das erfindungsgemäße Verfahren kann entsprechend den Ausgestaltungen des Aufbaus der Abstandshalter so ausgestaltet sein, daß die pro Längeneinheit in Richtung der Längserstreckung der den Abstandshalter mit abnehmender Dicke tragenden Vertiefung bzw. Erhebung aufgetragene Klebstoffmenge in Richtung auf die Einprägung hin, die die künftige "Faltenspitze" markiert, abnehmend gesteuert wird.

Eine vorteilhafte weitere Ausführung sieht so aus, daß nacheinander (durch mehrere Düsen oder u.U. auch durch mehrfaches Führen ein und derselben Düse über den betreffenden Bereich) ein kontinuierlicher und auf oder unter diesem ein unterbrochener Auftrag erfolgt. Nach diesem Prinzip sind vielgestaltige Abstandshalterprofile erzeugbar.

Für die Filterleistung ist es von Vorteil, wenn nur eine möglichst kleine Fläche des Filtermaterials mit dem Abstandshalter (dem Klebstoff) bedeckt ist.

Dies ist dadurch realisierbar, daß der Auftrag räumlich exakt definiert, vorzugsweise im wesentlichen linear, d.h. mit gegenüber der Länge der Schicht geringer Breite, erfolgt. Dies setzt die Wahl eines geeigneten Klebstoffs - mit auf das Filtermaterial abgestimmten Benetzungseigenschaften - und die richtige Einstellung einer pastosen bis geleeartigen Konsistenz voraus derart, daß zumindest ein breites Verlaufen auf dem Filtermaterial vor dem Aushärten vermieden wird, möglichst aber ein räumlich exakt begrenztes Klebstoffaggregat auf das Filtermaterial aufgebracht werden kann.

Die pro Längeneinheit des Filtermaterials aufgetragene Klebstoffmenge kann - als eine grundsätzliche Möglichkeit - über die Variation der pro Zeiteinheit aus einer Auftragsvorrichtung auf die durchlaufenden Materialbahn ausgegebenen Klebstoffmenge verändert werden. Zur Variation der Klebstoffmenge pro Zeiteinheit kann eine entsprechende Steuerung des Querschnitts der Austrittsöffnung der Auftragsvorrichtung vorgenommen werden, d.h. konkret bei Annäherung an die die künftigen "Faltenspitzen" merkierenden Faltlinien deren Querschnitt verringert und bei Entfernung von diesen vergrößert werden.

Zusätzlich oder alternativ hierzu kann zur Variation der Klebstoffmenge pro Zeiteinheit eine entsprechende Steuerung des Austrittsdrucks aus der Auftragsvorrichtung vorgenommen werden.

Eine weitere - wiederum mit den anderen Möglichkeiten kombinierbare - Möglichkeit besteht darin, daß über Teilbereiche der Längserstreckung der Abstandshalter ein Auftrag in mehreren Schichten übereinander erfolgt. Dies kann wiederum durch mehrere Düsen oder durch mehrfaches Überstreichen der betreffenden Bereiche mit ein und derselben Düse erfolgen.

Schließlich kann - ebenfalls wahlweise in Kombination mit einer oder mehreren der anderen Möglichkeiten - die pro Längeneinheit der Filtermaterialbahn aufgetragene Klebstoffmenge durch Variation der Relativgeschwindigkeit zwischen der Materialbahn und der Austrittsöffnung einer Auftragsvorrichtung verändert werden.

Speziell zur Realisierung des Filtereinsatzes mit einen Bereich ansteigender und einen Bereich konstanter Höhe aufweisenden Einprägungen wird zweckmäßigerweise die pro Längeneinheit des Materials in Richtung der Längserstreckung der Erhebung(en) aufgetragene Klebstoffmenge über den ersten Teil auf einem vorbestimmten ersten Wert gehalten und über den zweiten Teil vom ersten Wert aus stetig ansteigend gesteuert, wobei speziell der erste Wert Null sein, d.h. im ersten Teil auf einen Klebstoffauftrag verzichtet werden kann.

Es ist zu beachten, daß in den vorstehenden Ausführungen unter einem für das Fluid durchlässigen Material sämtliche üblichen bzw. für bestimmte Fluids eisnetzbaren Filtermaterialien, insbesondere Faservliese aus Zellulose, Glas-, Mineral- oder Keramikfasern, feinmaschige Gewebe mit oder ohne Imprägnierungen etc. und unter Klebstoffen die zur stoffschlüssigen Verbindung derartiger Materialien miteinander brauchbaren Stoffe, insbesondere Klebstoffe im engeren Sinne, aber auch am Filtermaterial haftende thermoplastische oder Schaumstoffmaterialien o. ä. zu verstehen sind.

Unter einer im wesentlichen zickzackförmigen, kontinuierlichen Faltung sind auch Faltenanordnungen inbegriffen, bei denen der Faltenquerschnitt senkrecht zu den Faltenkanten etwa trapezförmig ist oder die Faltenkanten verrundet sind.

Weitere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
Fig. 1a bis 1d perspektivische Prinzipdarstellungen von Filtereinsätzen gemäß Ausführungsformen der Erfindung,
Fig. 2a bis 2c schematische Querschnittsdarstellungen der Faltenanordnungen (senkrecht zu den Faltenkanten) bei speziellen Ausführungsformen von Filtereinsätzen ähnlich dem nach Fig. 1a, wobei Fig. 2c eine nicht erfindungsgemäße Anordnung zeigt,
Fig. 3a bis 3c schematische Querschnittsdarstellungen der Faltenanordnungen (senkrecht zu den Faltenkanten) bei speziellen Ausführungsformen von Filtereinsätzen ähnlich dem nach Fig. 1b, wobei Fig. 3c eine nicht erfindungsgemäße Anordung zeigt,
Fig. 4a bis 4d schematische Querschnittsdarstellungen der Faltenanordnungen (senkrecht zu den Faltenkanten) bei speziellen Ausführungsformen von Filtereinsätzen ähnlich dem nach Fig. 1c, wobei Fig. 4b bis 4d nicht erfindungsgemäße Anordnung zeigen,
Fig. 5a bis 5d schematische Querschnittsdarstellungen der Faltenanordnungen (senkrecht zu den Faltenkanten) bei speziellen Ausführungsformen von Filtereinsätzen ähnlich dem nach Fig. 1d, wobei Fig. 5b bis 5d nicht erfindungsgemäße Anordnunger zeigen,
Fig. 6 eine schematische Ausschnitts-Darstellung einer geprägten Filtermaterialbahn als Zwischenprodukt für die Herstellung eines Filtereinsatzes gemäß Fig. 5a bis 5d,
Fig. 7a und 7b schematische Querschnittsdarstellungen der Faltenanordnungen (parallel zu den Faltenkanten) bei einem Filtereinsatz gemäß Fig. 1d bzw. einer modifizierten Ausführung desselben und
Fig. 8 eine schematische Querschnittsdarstellung der Faltenanordnung (senkrecht zu den Faltenkanten) bei einer Ausführungsform eines hohlzylindrischen Filtereinsatzes.

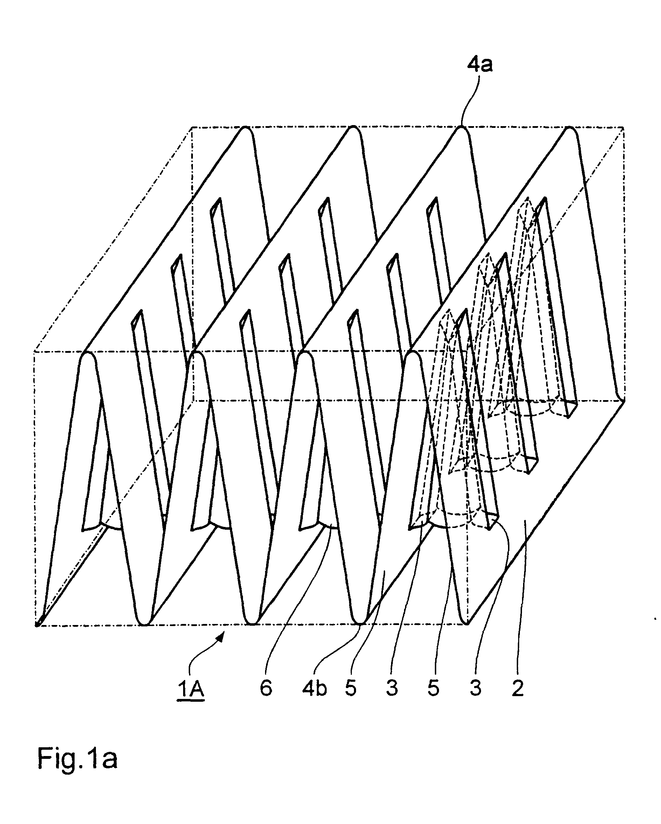

Fig. 1a zeigt in stark vereinfachter Darstellung einen in seiner äußeren Gestalt angenähert quaderförmigen Filtereinsatz 1A aus einem Glasfaser-Filtervlies 2 mit Kunstharz-Imprägnierung, das mit einseitig eingeprägten, sickenartigen Vertiefungen 3 versehen und mit (leicht verrundeten) oberen und unteren Faltenkanten 4a und 4b annähernd zickzackförmig gefaltet ist, so daß die eingeprägten Vertiefungen 3 in je zwei benachbarten Faltenwänden 5 einander zugewandt sind. Die Vertiefungen bzw. Sicken 3 haben eine zu den unteren Faltenkanten 4b hin, d.h. mit zunehmender Öffnungsweite der Falten, zunehmende Höhe.

Die Faltenabstände der Faltung sind (zur Erreichung bestimmter Einsatzparameter) so groß gewählt, daß die Scheitelflächen 3a einander gegenüberliegender Vertiefungen 3 einander nicht berühren.

Auf jede der Scheitelflächen 3a ist eine in Richtung auf die unteren Faltenkanten 4b hin dicker werdende Klebstoffschicht 6 aufgetragen. Die Klebstoffschichten einander gegenüberliegender Scheitelflächen 3a sind miteinander verbunden, wodurch (im ausgehärteten Zustand des Klebstoffs) die jeweils einander gegenüberliegenden Vertiefungen 3 und damit die entsprechenden Faltenwände 5 fest miteinander verbunden und im wesentlichen starr gegeneinander abgestützt sind und dadurch der Filtereinsatz 1 mechanisch steif ist.

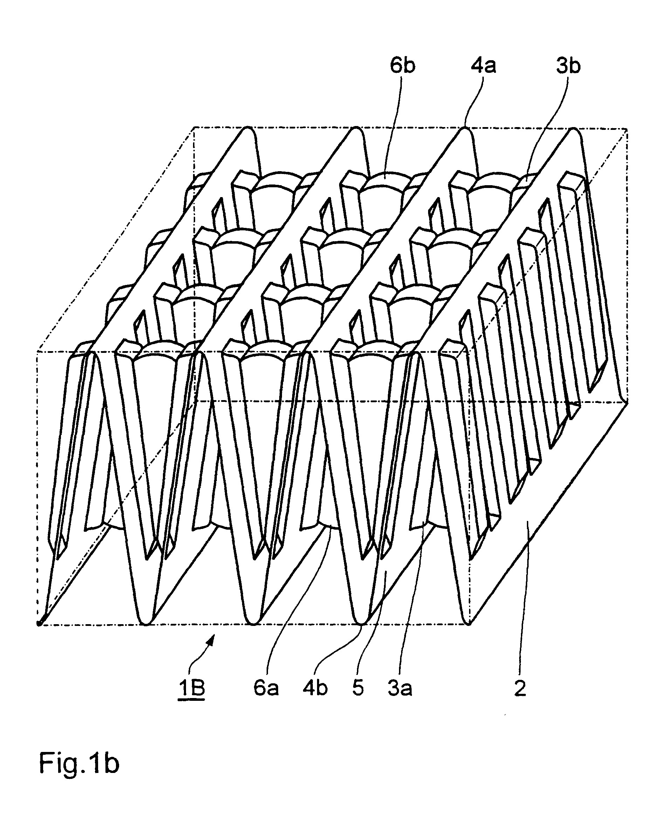

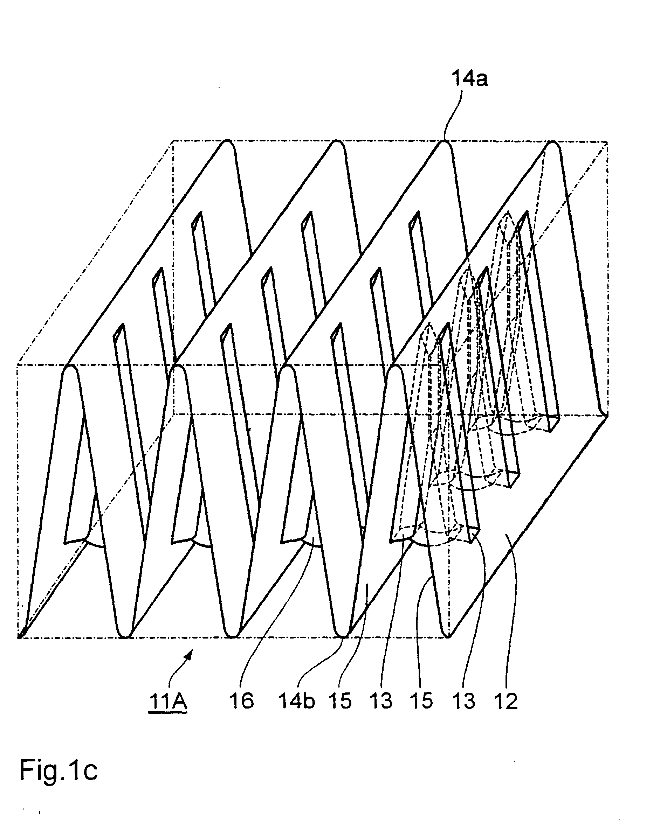

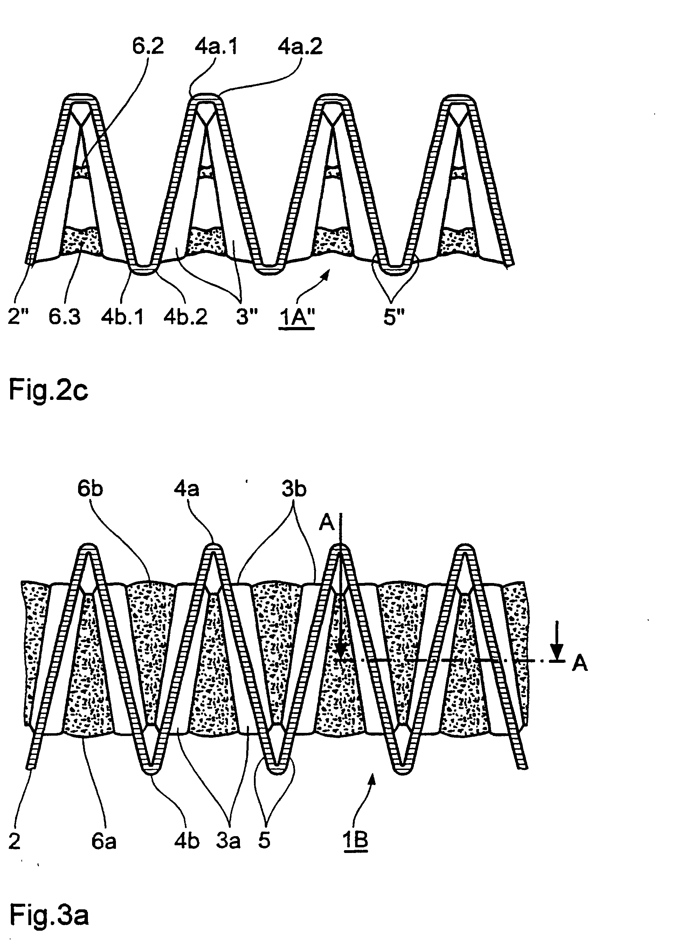

Fig. 1b zeigt einen gegenüber der Ausführung nach Fig. 1a modifizierten Filtereinsatz 1B, bei dem beidseitig auf jeder Faltenwand 5 Sicken 3a bzw. 3b und Abstandshalter (Klebstoffaggregate) 6a bzw. 6b vorgesehen sind; vgl. auch die Beschreibung zu Fig. 3a bis 3c weiter unten.

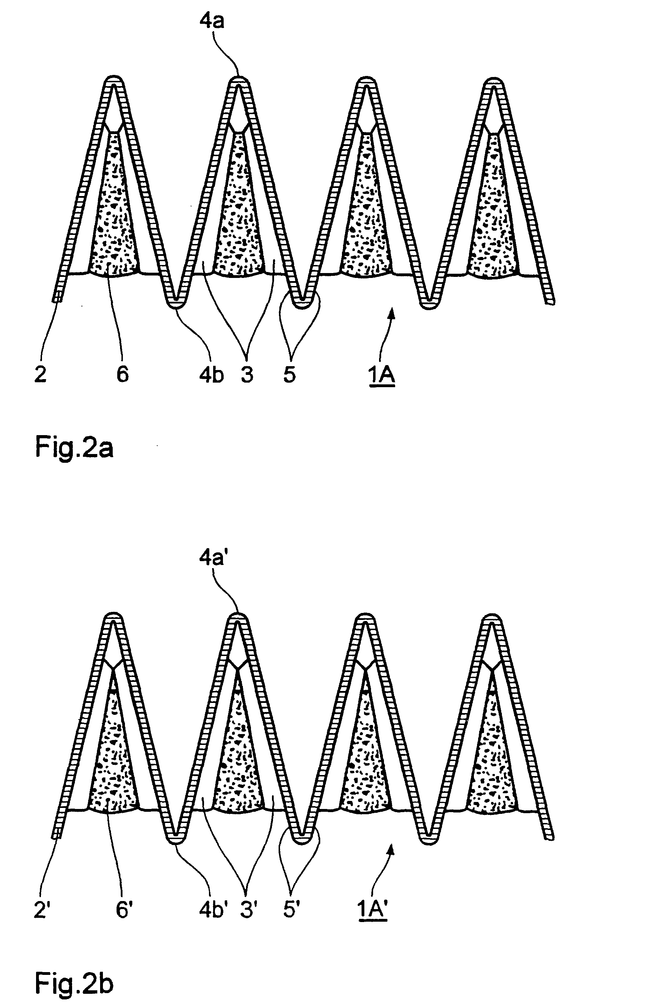

Fig. 2a zeigt eine Querschnittsdarstellung der Faltenanordnung des in Fig. 1a dargestellten Filtereinsatzes 1A in einer Schnittebene prallel zur Längserstreckung der Abstandshalter. Hier ist die Höhenzunahme sowohl der Sicken (Vertiefungen) 3 als auch der Klebstoffschichten 6 in Richtung von den oberen zu den unteren Faltenkanten hin sehr deutlich zu erkennen.

Fig. 2b zeigt eine alternative Ausbildung eines Filtereinsatzes 1A', bei dem in einer zu Fig. 2a ähnlichen Grundanordnung die Faltenwände als Wände 5' mit über ihre Längserstreckung im wesentlichen konstante Höhe aufweisenden Sicken 3' ausgebildet sind, während die Zunahme der Dicke der Klebstoffschichten 6' vom oberen Faltenkantenbereich 4a' zum unteren Faltenkantenbereich 4b' hier - bei etwa gleichem Faltenwinkel - ausgeprägter ist als bei der Anordnung nach Fig. 2a.

Fig. 2c zeigt ein Filterelement 1A", bei dem der Querschnitt der Faltung trapezförmig ist derart, daß zwischen aufeinanderfolgenden Faltenwänden 5" jeweils zwei Faltlinien 4a.1, 4a.2 (obere Faltenkanten) bzw. 4b.1, 4b.2 (untere Faltenkanten) vorgesehen sind. Die Faltenwände 5" weisen jeweils eingeprägte Sicken 3" auf, die von den oberen Faltenkanten bis zu den unteren Faltenkanten reichen und über diese Erstreckung konstante Höhe haben. Im oberen Teil tragen die Sicken 3" jeweils einen relativ kleinen Klebstoffpunkt 6.2, und nahe dem unteren, den unteren Faltenkanten benachbarten, Ende tragen sie - entsprechend dem hier größeren Faltenabstand - ein wesentlich voluminöseres, halbkugelförmiges Klebstoffaggregat 6.3. Die einzelnen Klebstoffaggregate auf den Sicken 3" einander benachbarter Faltenwände sind jeweils miteinander verschmolzen, so daß die Faltenwände 5" hierüber fest miteinander verbunden sind.

Fig. 2a zeigt eine Querschnittsdarstellung des Filterelementes 1B gemäß Fig. 1b, bei dem Faltenwände vorgesehen sind, die jeweils beidseitig Sicken 3a bzw. 3b, mithin sowohl Vertiefungen als auch Erhebungen, aufweisen. (Die übrigen Bezugsziffern aus Fig. 1a bzw. 3a wurden zur Vereinfachung beibehalten.) Die einander gegenüberliegenden Erhebungen bzw. Vertiefungen 3a und 3b sind jeweils - wie bei Fig. 3a - über ein zusammengesetztes Klebstoffaggregat miteinander verbunden, wobei sich durch die allseitige Verbindung benachbarter Faltenwände ein hochgradig druck-und zugstabiles und damit auch in starken Strömungen mit turbulenten Anteilen bzw. starken zeitlichen Druckänderungen sehr formbeständiges Filterpaket ergibt.

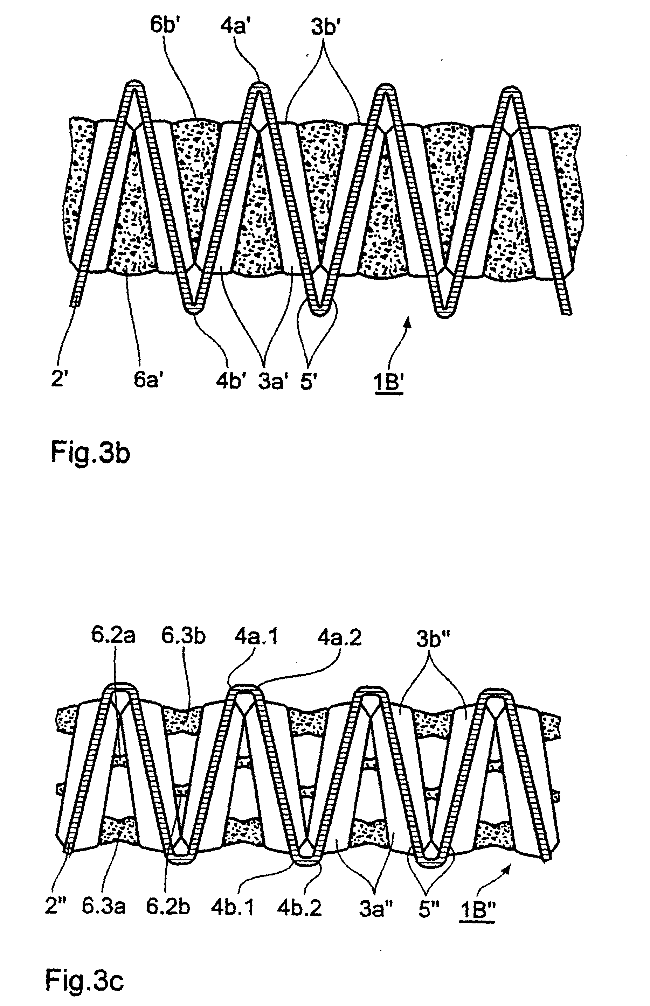

Eine analoge Ausbildung mit beidseitig jeder Faltenwand vorgesehenen Sicken und Klebstoffaggregaten ist auch bei den Anordnungen nach Fig. 2b und 2c möglich. Diese Ausführungsformen sind in Fig. 3b bzw. 3c gezeigt, wobei die Bezugsziffern für ähnliche Teile denen bei den vorangehenden Figuren entsprechen und auf eine gesonderte Beschreibung hier verzichtet werden kann.

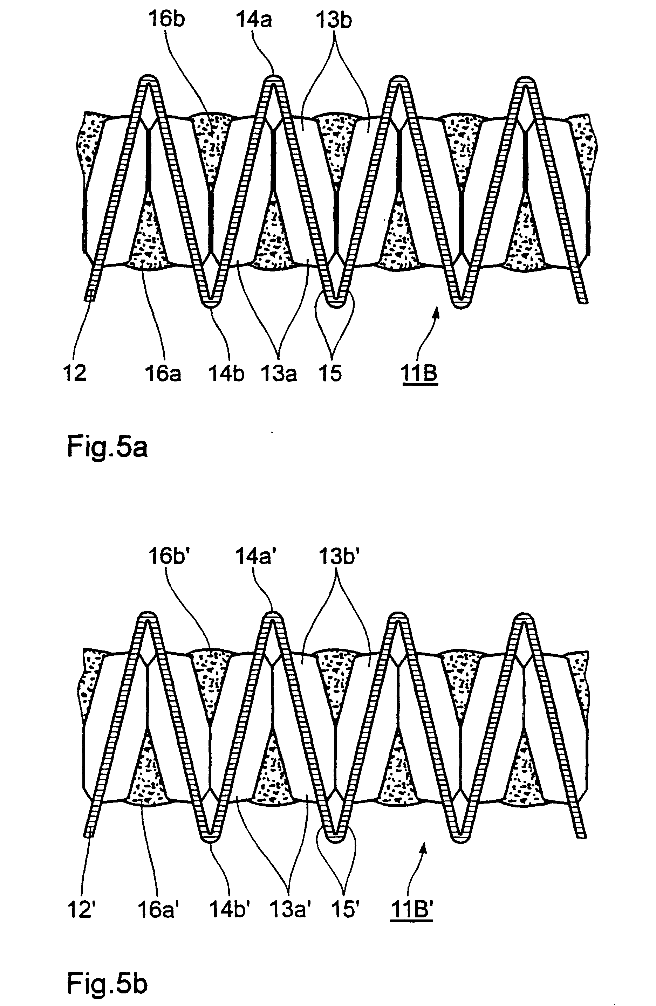

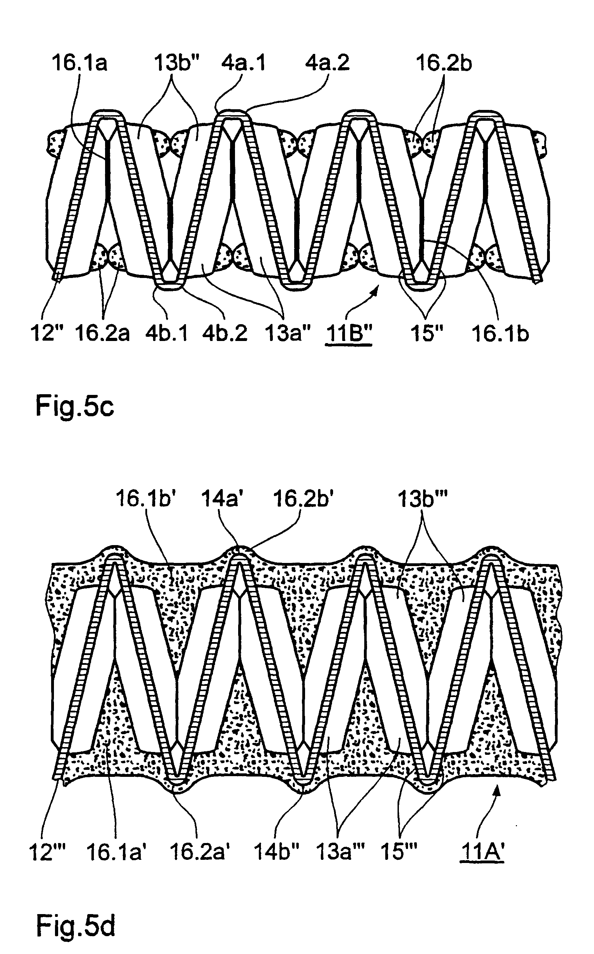

Fig. 1c zeigt in Fig. 1a entsprechender Darstellung einen angenähert quaderförmigen Filtereinsatz 11A aus einem Glasfaser-Filtervlies 12 mit einseitig eingeprägten, sickenartigen Vertiefungen bzw. Erhebungen 13, das - mit leicht verrundeten oberen und unteren Faltenkanten 14a und 14b - annähernd zickzackförmig gefaltet ist, so daß die eingeprägten Erhebungen 13 in einander benachbarten Faltenwänden 15 einander zugewandt sind. Die Sicken 13 beginnen in einem Abstand von den (in der Figur) oberen Faltenkanten 14a und haben (zusätzlich zu dem bei eingeprägten Verteifungen bzw. Erhebungen technologisch erforderlichen kurzen Anstiegsbereich) einen ersten Abschnitt l₂ mit auf die unteren Faltenkanten 14b hin, d.h. mit zunehmender Öffnungsweite der Falten, zunehmender Höhe und einen zweiten Abschnitt l₃ mit konstanter Höhe. Die Form der Sicken ist in Fig. 4a bis 4d bzw. 5a bis 5d genauer zu erkennen und weiter unten erläutert.

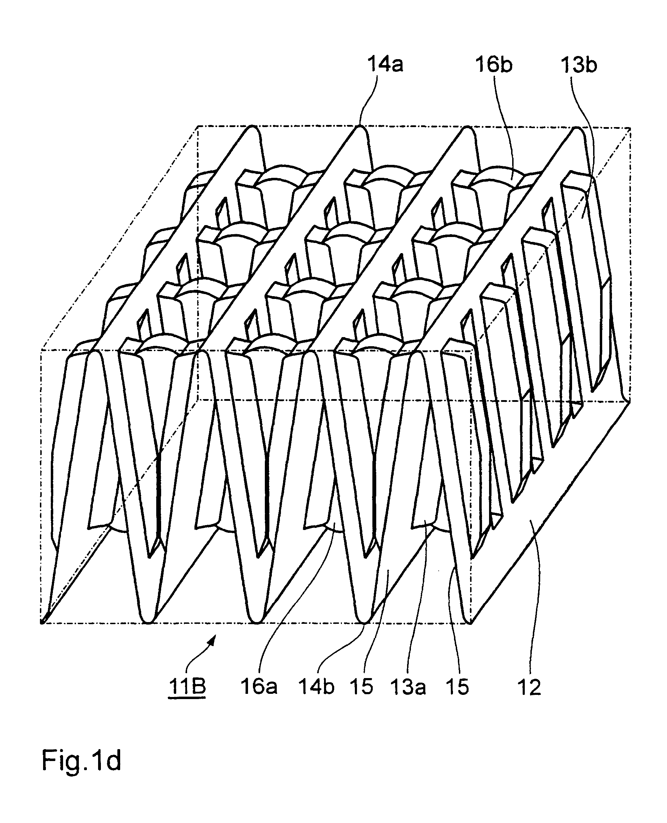

Fig. 1d zeigt einen gegenüber der Ausführung nach Fig. 1c modifizierten Filtereinsatz 11B, bei dem beidseitig auf jeder Faltenwand 15 Sicken 13a bzw. 13b und Abstandshalter (Klebstoffaggregate) 16a bzw. 16b vorgesehen sind; vgl. auch die Beschreibung zu Fig. 5a bis 5d weiter unten.

Bei beiden Filtereinsätzen 11A und 11B ist auf jede der Scheitelflächen der Sicken eine im ersten Abschnitt l₂ zunächst dünne, im zweiten Abschnitt l₃ jedoch in Richtung auf die unteren Faltenkanten hin stetig dicker werdende Klebstoffschicht 16 aufgetragen. Die Klebstoffschichten auf einander gegenüberliegender Sicken sind miteinander verbunden, wodurch (im ausgehärteten Zustand des Klebstoffs) diese Sicken und damit die entsprechenden Faltenwände fest miteinander verbunden sind und der Filtereinsatz einen mechanisch steifen Körper bildet.

Fig. 4a bis 4d sind schematische Querschnittsdarstellungen der Faltenanordungen und zusätzlichen Abstandshalter von Filtereinsätzen (senkrecht zu den Faltenkanten) bei quaderförmigen Filtereinsätzen.

Fig. 4a zeigt zunächst die Ausführung nach Fig. 1c nochmals im Querschnitt, wobei auch die dort angegebenen Bezugsziffern verwendet wurden.

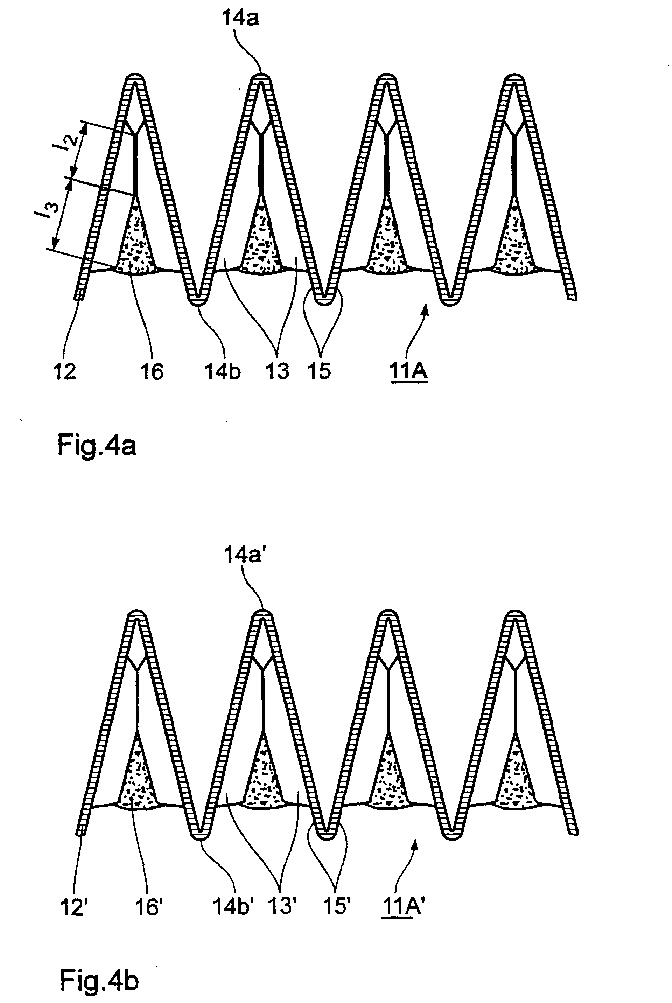

Fig. 4b zeigt einen weiteren Filtereinsatz 11A' mit einer mit Fig. 4a identischen Grundanordnung (deren Elemente mit entsprechenden Bezugsziffern bezeichnet sind). Hier weisen aber die Erhebungen 13' der Faltenwände 15' nur im Bereich l₃ mit konstanter Höhe einen sie verbindenden und gegeneinander abstützenden Abstandshalter 16' auf, während sie im Bereich l₂ in direktem Kontakt miteinander stehen und sich gegeneinander abstützen. Hier kann - falls auch hier, zusätzlich zur Fixierung im Bereich l₃, eine Fixierung gegen seitliche Verschiebung erforderlich erscheint - eine geeignete Profilierung der einander zugewandten Sicken-Scheitelflächen vorgesehen sein, die deren Ineinandergreifen bei der Faltung sichert.

Die Abstandshalter 16' können durch einen Klebstoffauftrag entsprechend zunehmender Dicke auf die Scheitelflächen einer oder beider der einander zugewandten Sicken 13 mit anschließenden Aushärten des Klebstoffs im Bereich l₃ erzeugt sein. Es ist aber auch möglich, vorgefertigte Abstandshalter der in der Figur gezeigten dreieckigen Querschnittsgestalt während oder ggfs. auch unmittelbar nach der Faltung in das Faltenpaket einzusetzen.

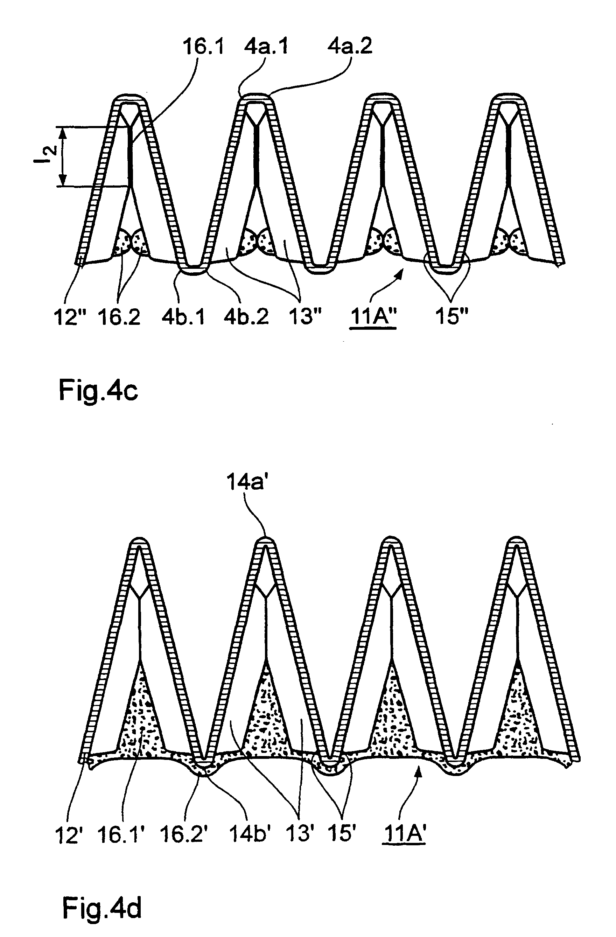

Ein weiterer Filtereinsatz 11A", bei dem die Faltung eine etwas andere Gestalt hat und die Erhebungen 13" nicht über ihre gesamte Länge miteinander verbunden sind, ist in Fig. 4c gezeigt. (Auch hier sind den Elementen in Fig. 4a bzw. 4b entsprechende Teile mit entsprechenden Bezugsziffern bezeichnet.) Benachbarte Faltenwände 15" sind hier jeweils über eine doppelte Faltkante 4a.1", 4a.2" bzw. 4b.1", 4b.2" miteinander verbunden, wie sie sich bei Erzeugung der Faltenkanten-Prägelinien durch Prägewalzen mit rechteckigen Prägeleisten ergibt. Hier sind weiterhin die Erhebungen im Abschnitt l₂, in dem sie sich gegeneinander abstützen, über eine dünne Klebstoffschicht 16.1" miteinander verklebt, und zusätzlich ist am dem Abschnitt l₂ abgewandten Ende des Abschnitts l₃ auf jede Erhebung ein hochviskoser Klebstofftropfen 16.2" aufgebracht, der so bemessen ist, daß zwei sich berührende Klebstofftropfen 16.2" gerade den am Ort ihres Aufbringens bestehenden Abstand zwischen den Faltenwänden überbrücken und diese dort miteinander verbinden.

Fig. 4d zeigt eine weitere, der Anordnung nach Fig. 4b sehr ähnliche Ausbildung (bei der auch dieselben Bezugsziffern wie in Fig. 4b verwendet werden), bei der jedoch die Abstandshalter einen zwischen den Sicken 13' liegenden Abschnitt 16.1' und einen die Faltenkanten übergreifenden Abschnitt 16.2' aufweisen. Diese Ausbildung kann durch einen einmaligen Klebstoffauftrag einer entsprechend großen Menge - vor oder nach der Faltung - erreicht werden, es kann aber auch nachträglich ein zusätzlicher, durchgehender Klebstoffaden auf den Faltenkantenabschnitt aufgebracht werden. Statt Klebstoff kann in einer weiter modifizierten Ausbildung auch ein (bereits vernetzter) Kunst- bzw. Schaumstoffaden o.ä. eingesetzt werden.

Fig. 5a zeigt eine Querschnittsdarstellung des Filterelementes 11B gemäß Fig. 1d, bei dem Faltenwände vorgesehen sind, die jeweils beidseitig Sicken 13a bzw. 13b, mithin sowohl Vertiefungen als auch Erhebungen, aufweisen. (Die übrigen Bezugsziffern aus Fig. 1d wurden zur Vereinfachung beibehalten.) Die einander gegenüberliegenden Erhebungen bzw. Vertiefungen 13a und 13b sind jeweils - wie bei Fig. 4a - über ein zusammengesetztes Klebstoffaggregat miteinander verbunden, wobei sich durch die allseitige Verbindung benachbarter Faltenwände ein hochgradig druck-und zugstabiles und damit auch in starken Strömungen mit turbulenten Anteilen bzw. starken zeitlichen Druckänderungen sehr formbeständiges Filterpaket ergibt.

Eine analoge Ausbildung mit beidseitig jeder Faltenwand vorgesehenen Sicken und Klebstoffaggregaten ist auch bei den Anordnungen nach Fig. 4b bis 4d möglich. Diese Ausführungsformen sind in Fig. 5b bzw. 5d gezeigt, wobei die Bezugsziffern für ähnliche Teile denen bei den vorangehenden Figuren entsprechen und auf eine gesonderte Beschreibung hier verzichtet werden kann.

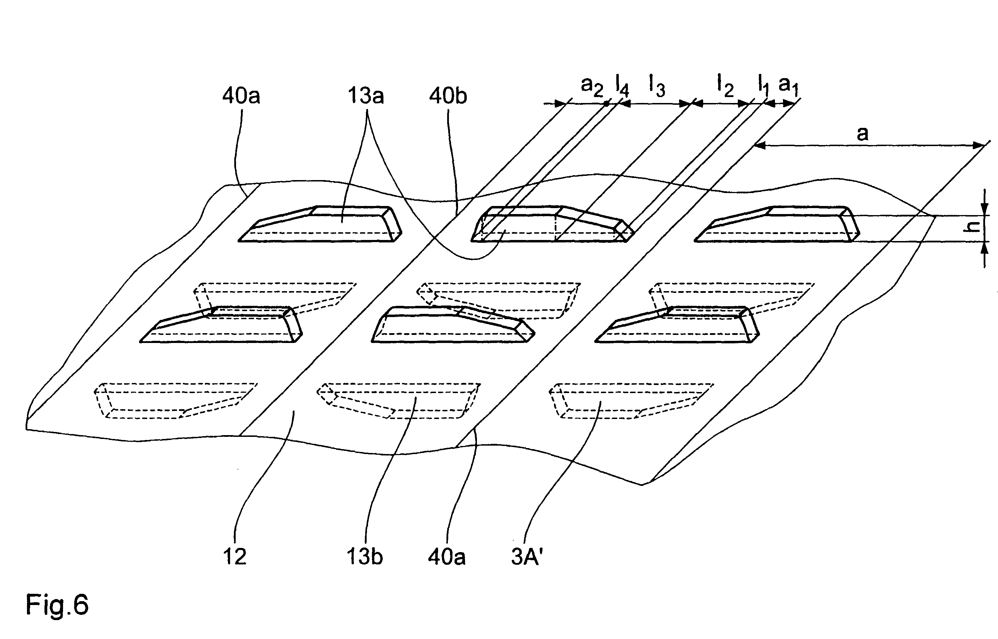

Fig. 6 ist eine schematische perspektivische Darstellung des geprägten Filtervlieses 12 für den Filtereinsatz 11B nach Fig. 1d bzw. 5a.

In der Figur ist zu erkennen, daß das (im Ausschnitt gezeigte) Filtervlies 12 aus mit einem kleinen Kunstharz-Zusatz imprägnierten Glas-Kurzfasern in Richtung seiner Längserstreckung 1 jeweils in einem Abstand a senkrecht zur Längserstreckung verlaufende Prägelinien 40a, 40b aufweist, die die Lage der Faltenkanten 14a bzw. 14b bei der nachfolgenden Faltung (vgl. Fig. 1d) bestimmen. Weiterhin sind in das Filtervlies 12 jeweils zwischen zwei benachbarten Prägelinien 40a, 40b sich in Längsrichtung 1 erstreckende (wie auch in den übrigen Figuren überhöht gezeichnete) Vertiefungen 13a bzw. Erhebungen 13b geprägt, wobei Vertiefungen und Erhebungen senkrecht zur Längsrichtung des Vlieses abwechselnd vorgesehen sind.

In der dargestellten Ausführungsform beginnen die Vertiefungen 13a bzw. Erhebungen 13b jeweils in einem Abstand a₁ von einer benachbarten Faltenkanten-Prägelinie 40a bzw. 40b mit einen relativ stark ansteigenden Abschnitt l₁, an den sich ein schwächer ansteigender Abschnitt l₂ anschließt, und setzen sich jeweils in einem zur Oberfläche der ungeprägten Bereiche des Vlieses parallelen Abschnitt l₃ mit einer Höhe h fort, an den sich ein Übergangsabschnitt l₄ mit großer Steigung anschließt, der auf die ungeprägte Oberfläche zurückführt, bevor (im Abstand a₂) die nächste Faltenkanten-Prägelinie 40a bzw. 40b folgt.

In der Prägung des Vlieses bestimmt die Größe a die Faltenhöhe und damit die Höhe des Filtereinsatzes 11B nach der Faltung, während der Anstieg im Abschnitt l₂, in dem gemäß Fig 1d die Faltenwände 15 nach der Faltung aneinander anliegen, den Winkel bestimmt, den die Faltenwände miteinander einschließen. Die Größe h wird so gewählt, daß unter Beachtung der Eigenschaften des konkreten Filtervlieses die Gefahr von Durchprägungen nicht besteht. Je größer h bei vorgegebenem Anstieg im Abschnitt l₂ ist, desto länger kann l₂ gemacht werden, d.h. auf einer umso längeren Strecke liegen die Scheitelflächen der einander bei der Faltung zugewandten Erhebungen bzw. Vertiefungen aneinander an.

Grundsätzlich ist zur Realisierung eines möglichst steifen Filtereinsatzes ein großer Wert des Verhältnisses l₂/a erstrebenswert - je größer zur Bereitstellung hocheffizienter Filter a gemacht werden soll, umso kritischer wirkt sich aber die Tatsache aus, daß mit ansteigendem l₂ und konstantem Neigungswinkel der Faltenwände auch h ansteigt und sich damit die Gefahr von Durchprägungen des Filtervlieses vergrößert. Dies führte bei Anordnungen gemäß dem Stand der Technik mit im Querschnitt im wesentlichen keilförmigen Sicken ohne zusätzliche Abstandshalter dazu, daß bei vorgegebenem Neigungswinkel der Faltenwände der erreichbaren Faltenhöhe und damit Höhe des Filtereinsatzes enge Grenzen gesetzt waren.

Bei der erläuterten Ausführung der Erfindung wird nun die Sickenhöhe h auf einen im Hinblick auf die Gefahr von Durchprägungen noch unkritischen Wert begrenzt, und nach Erreichen dieses Wertes im Zuge des Anstiegs im Bereich l_{2haben} die Sicken im weiteren Verlauf (Bereich l₃) die konstante Höhe h, von der ausgehend zusätzliche Elemente aufgesetzt werden können, die auch in diesem Bereich die benachbarten Faltenwände gegeneinander abstützen und miteinander verbinden.

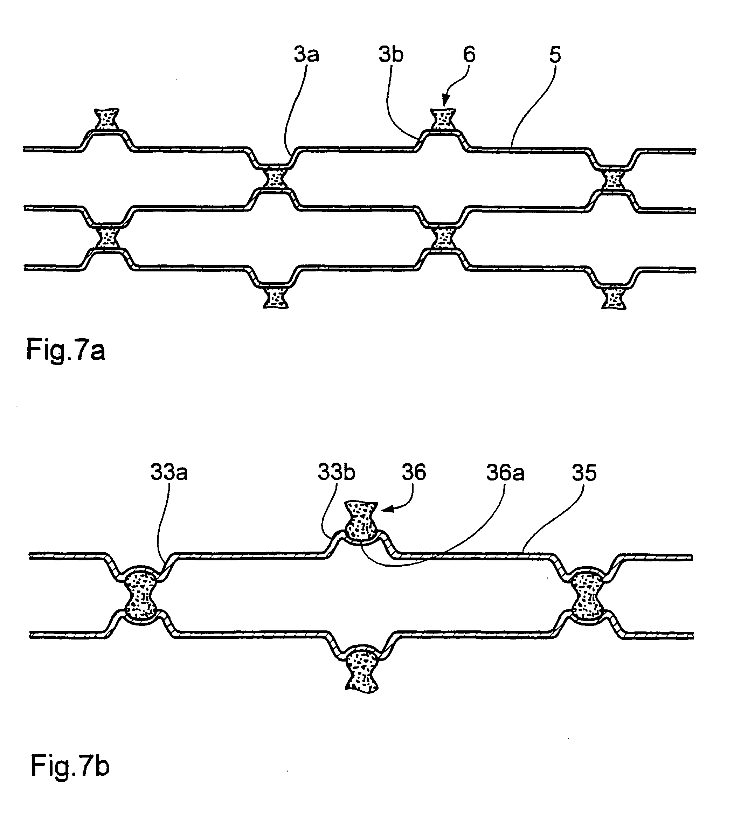

Fig. 7a zeigt eine Querschnittsdarstellung von zwei Falten einer Faltung nach Fig. 3a in einer Ebene parallel zu den Faltenkantenabschnitten (längs der Linie A-A in Fig. 7a) bei einer Ausführungsform, bei der die im Mittelteil der Klebstoffaggregate verringerte Breite erkennbar ist.

Fig. 7b zeigt eine Abwandlung dieser Anordnung, bei der die Sicken 33a und 33b in den Faltenwänden 35 derart profiliert sind, daß sie eine zentrale Längsrille 36a aufweisen, in der ein Klebstoffaden 36 mit relativ geringer Breite und mit durch die Rillenwandung exakt definierter, im Schnitt annähernd halbkreisförmiger Kontaktfläche zur Sicke liegt. Hier ist zur Verbindung einander zugewandter Sicken nur ein Klebstoffauftrag - eben in Form des Fadens 36 in jeweils eine der im Ergebnis des Faltungsvorganges benachbarten Rillen 36a - vorgesehen. Die endgültige knochenähnliche Querschnittsgestalt des Abstandshalters bildet sich im Ergebnis dessen aus, daß dieser Faden in einem Zwei-Stufen-Faltungsprozeß zunächst mit der gegenüberliegenden Rille in Kontakt gebracht und verklebt und dann im noch plastischen Zustand in Querrichtung gestreckt wird.

Die Anordnung nach Fig. 7b mit in sich profilierten Sicken bietet den Vorteil, daß der Klebstoffauftrag mit geringer und exakt definierter seitlicher Erstreckung erfolgt, so daß Verschmierungen auf dem Filtermaterial vermieden werden und die wirksame Filterfläche maximiert werden kann.

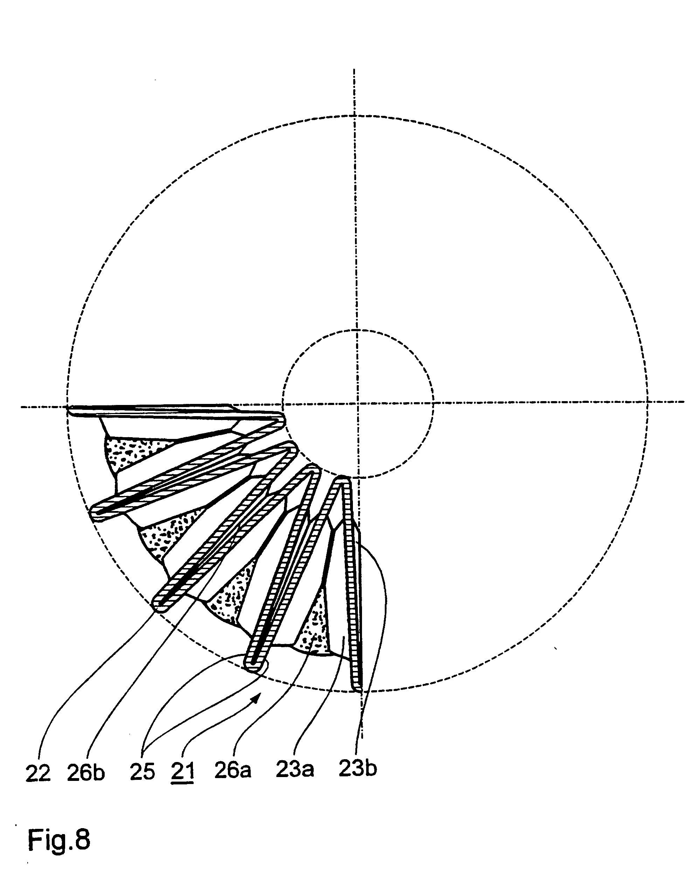

Fig. 8 ist eine schematische Querschnittsdarstellung eines Ausschnitts eines in der äußeren Gestalt hohlzylindrischen Filtereinsatzes 21 gemäß einer weiteren Ausführungsform der Erfindung. Der innere Aufbau gleicht teiweise dem eines quaderförmigen Filtereinsatzes; die Teile sind daher auch in Anlehnung an die obigen Figuren bezeichnet, und eine Erklärung des Aufbaus wird lediglich im Hinblick auf die Abweichungen vom quaderförmigen Filtereinsatz gegeben.

Wie in Fig. 8 zu erkennen, ist der hohlzylindrischen äußeren Gestalt des Filtereinsatzes 21 eine Asymmetrie sowohl zwischen der Gestalt der Vertiefungen 23a und Erhebungen 23b in den Faltenwänden 25 als auch hinsichtlich des Klebstoffauftrags auf den der Innenseite des Einsatzes zugewandten gegenüber den der Außenseite zugewandten Oberflächen der Faltenwände geschuldet:

Die der Außenseite zugewandten Vertiefungen 23a haben die gleiche Gestalt und weisen einen sehr ähnlichen Klebstoffauftrag 26a auf wie die Erhebungen und Vertiefungen in den Filtereinsätzen nach Fig. 1c bzw. 1d. Hingegen sind die der Innenseite des Filtereinsatzes zugewandten Erhebungen 23b des Filtervlieses 22 - wegen des hier wesentlich geringeren maximalen Abstandes der Faltenwände - im Querschnitt einfach keilförmig, und ihre Verklebung erfolgt mit einem dünnen, gleichmäßigen Klebstoffauftrag 26b.

Diese Ausbildung kann - je nach Faltenhöhe und erlaubter Prägehöhe des Filtervlieses - auch dahingehend modifiziert sein, daß auch die der Filterinnenseite zugewandten Sicken eine von der Keilform abweichende Gestalt, insbesondere eine Gestalt ähnlich der der Sicken nach Fig. 2, haben, jedoch wird sich beim hohlzylindrischen Filtereinsatz die Gestalt der Erhebungen in der Regel von der der Vertiefungen unterscheiden.

Die Erfindung beschränkt sich in ihrer Ausführung nicht auf die vorstehend angegebenen Ausführungsbeispiele. Vielmehr ist - insbesondere hinsichtlich der Geometrie und der Kombination von Einprägungen in das Filtermaterial und Auftragsschichten auf dieses - eine Vielzahl von Varianten denkbar, welche von der dargestellten Lösung auch bei grundsätzlich anders gearteter Ausführung Gebrauch.

## Patentansprüche

1. Filtereinsatz (1A; lA'; 1A"; 1B; 1B'; 1B"; 11A; 11A'; 11A"; 11B; 11B'; 11B"; 21) für ein Fluidfilter, insbesondere in quaderförmiger oder hohlzylindrischer Außenform, der eine Anzahl von in zickzackförmiger, zusammenhängender Faltung gebildeten Faltenwänden (5; 5'; 5"; 15; 15'; 15"; 25; 35) aus für das Fluid durchlässigem flächigem Material (2; 2'; 12; 12'; 22) mit in die Ebene mindestens eines Teils der Faltenwände eingeprägten Vertiefungen und/oder Erhebungen (3; 3a, 3b; 3'; 3"; 3a', 3b'; 3a", 3b"; 23a, 23b; 33a, 33b) zur Versteifung der Faltung aufweist, wobei die Erhebungen benachbarter Faltenwände jeweils einer Falte mindestens abschnittsweise miteinander verbunden und gegeneinander abgestützt sind,
**dadurch gekennzeichnet, daß**
zwischen den Erhebungen entlang irher gesamben Längserstreckung sie verbindende und gegeneinander abstützende, steife Abstandshalter (6; 6a, 6b; 6'; 6a', 6b'; 6.2; 6.3; 6.2a, 6.3a, 6.2b, 6.3b; 16; 16a, 16b; 16'; 16a', 16b'; 16.1, 16.2; 16.1a, 16.1b; 16.2a, 16.2b; 16.1a', 16.1b'; 26a; 36) vorgesehen sind, wobei die gemäß der Zichzachform des Faltenquerschnitts erforderliche Faltenwänderung in Richtung der Längserstreckung der Erhebungen durch eine Dickenänderung der Abstandshalter erbracht wird.

2. Filtereinsatz nach Anspruch 1, **dadurch gekennzeichnet, daß** die Abstandshalter durch ausgehärtete Klebstoffaggregate gebildet sind.

3. Filtereinsatz nach einem der vorangehenden Ansprüche, **dadurch gekennzeichnet, daß** die Höhe der Erhebungen in Richtung ihrer Längserstreckung im wesentlichen konstant ist.

4. Filtereinsatz nach Anspruch 1 oder 2, **dadurch gekennzeichnet, daß** die Höhe der Erhebungen in zwei Faltenwänden, die sich gegeneinander abstützen, in Richtung auf die diese Faltenwände miteinander verbindende Faltenkante hin abnimmt.

5. Filtereinsatz nach einem der Ansprüche 1, 2 oder 4, **dadurch gekennzeichnet, daß** die Erhebungen eine in Richtung ihrer Längserstreckung und somit in zu den Faltenkanten der Faltung im wesentlichen senkrechter Richtung mindestens über einen ersten Teil (l₂) ihrer Länge eine mit dem zunehmenden Abstand der Faltenwände gleichlaufend zunehmende Höhe und in einem sich an diesen Teil anschließenden zweiten Teil (l₃) im wesentlichen konstante Höhe (h) aufweisen.

6. Filtereinsatz nach einem der vorangehenden Ansprüche, **dadurch gekennzeichnet, daß** die Erhebungen im wesentlichen jeweils unmittelbar an einer Faltenkante beginnen.

7. Filtereinsatz nach einem der Ansprüche 1 bis 5, **dadurch gekennzeichnet, daß** die Erhebungen in einem vorbestimmten Abstand (a) von einer Faltenkante beginnen, wobei sie einen Abschnitt (l₁) aufweisen, in dem ihre Höhe stärker als der hälftige Abstand der Faltenwände zunimmt.

8. Filtereinsatz nach einem der vorangehenden Ansprüche, **dadurch gekennzeichnet, daß** die Faltenwände jeweils, vorzugsweise in alternierender Anordnung, nach beiden Seiten hin gerichtete Erhebungen aufweisen, so daß die Faltenwände sich beidseitig gegen benachbarte Faltenwände abstützen.

9. Verfahren zur Herstellung eines Filtereinsatzes nach einem der vorangehenden Ansprüche, bei dem eine Bahn des für das Fluid durchlässigen Materials mit die Lage von Faltenkanten vorbestimmenden Einprägungen versehen wird und in die Ebene mindestens eines Teils von künftigen Faltenwänden Vertiefungen und/oder Erhebungen zur Versteifung der Faltung eingeprägt werden und die Materialbahn an den die Faltenkanten bildenden Einprägungen gefaltet wird
**dadurch gekennzeichnet, daß**
vor oder während der Faltung auf jeweils mindestens einen der im Ergebnis der vorbestimmten Faltung einander zugewandten Vertiefungen und/oder Erhebungen ein Abstandshaltermaterial aufgebracht wird, über das die Erhebungen benachbarter Faltenwände aneinander angelegt und miteinander verbunden werden.

10. Verfahren nach Anspruch 9, **dadurch gekennzeichnet, daß** das Aufbringen der Abstandshalter als Klebstoffauftrag auf die Materialbahn erfolgt und während und/oder nach der Faltung eine Aushärtung des Klebstoffs ausgeführt wird.

11. Verfahren nach Anspruch 9 oder 10, **dadurch gekennzeichnet, daß** die aufgetragene Klebstoffmenge über die Variation der pro Zeiteinheit aus einer Auftragsvorrichtung ausgegebenen Klebstoffmenge verändert wird.

12. Verfahren nach einem der Ansprüche 9 bis 11, **dadurch gekennzeichnet, daß** auf dem zur Ausbildung der Klebstoffschicht vorgesehenen Bereich in einem Teil seiner Längserstreckung mehrere Klebstoffaufträge übereinander erfolgen.

13. Verfahren nach einem der Ansprüche 9 bis 11, **dadurch gekennzeichnet, daß** die pro Längeneinheit des Materials aufgetragene Klebstoffmenge durch variation der Relativgeschwindigkeit zwischen der Materialbahn und der Austrittsöffnung einer Auftragsvorrichtung verändert wird.

## Claims

1. A filter insert (1A; 1A'; 1A''; 1B; 1B'; 1B''; 11A; 11A'; 11A''; 11B; 11B'; 11B''; 21) for a fluid filter, in particular in a box or hollow cylindrical outer shape comprising:
a material (2; 2'; ; 12; 12'; 22) permeable to fluid and having a number of planar fold walls (5; 5'; 5''; 15; 15'; 15''; 25; 35) arranged in a continuous zigzag shape and including depressions and/or elevations (3; 3a, 3b; 3'; 3''; 3a', 3b'; 3a''; 3b''; 23a, 23b; 33a, 33b) stamped into the plane of at least a part of a respective one of the fold walls in order to stiffen the fold walls, wherein the elevations each have a face with a longitudinal extent and two side walls, and adjacent fold walls connected at a common fold edge define a fold;
**characterized in that**
rigid spacers (6; 6a, 6b; 6'; 6a', 6b'; 6.2; 6.3; 6.2a, 6.3a, 6.2b, 6.3b; 16; 16a, 16b; 16'; 16a', 16b'; 16.1, 16.2; 16.1a, 16.1b; 16.2a, 16.2b; 16.1a', 16.1b'; 26a; 36) are provided between and along the longitudinal faces of the elevations of adjacent fold walls wherein the height increase or decrease, respectively, which is necessary according to the zigzag shape of the fold cross-section in longitudinal direction of the elevations is effected by means of a thickness variation of the spacers.

2. The filter insert according to claim 1, wherein the spacers comprise cured adhesive aggregates.

3. The filter insert according to one of the preceding, wherein the respective elevations each have a constant height in a direction of their longitudinal extent.

4. The filter insert according to claim 1 or 2, wherein the respective elevations in adjacent fold wails each have a height that decreases toward the common fold edge.

5. The filter insert according to one of claims 1, 2 or 4, wherein the respective elevations each have a height which increases over a first part (l₂) of the longitudinal extent in the same direction as the spacing between adjacent fold walls increases and which remains constant (h) over a second part (l₃) of the longitudinal extent adjoining the first part.

6. The filter insert according to one of the preceding claims, wherein the elevations begin substantially directly at one of the fold edges.

7. The filter insert according to one of claims 1 to 5, wherein the elevations begin at a predetermined spacing (a) from a fold edge, and the depressions and/or elevations have a part (l₁) with a height that increases by more than half of a spacing of the fold walls.

8. The filter insert according to one of the preceding claims, wherein the fold walls have opposite sides and the fold walls have alternating elevations directed towards both sides, respectively, so that the fold walls are supported on both sides by adjacent fold walls.

9. A process for preparing a filter insert according to one of the preceding claims, comprising the steps of:
providing a length of fluid-permeable material with impressions which determine future fold edges that define future fold walls when the material is folded along the impressions;
stamping depressions and/or elevations into a plane of at least a part of the future fold walls in order to reinforce the future fold walls; and
folding the material along the impressions to form fold edges **characterized by** applying, before or during the folding, a spacer material to at least one of the depressions and/or elevations placed together as a result of the predetermined folding so that the elevations of adjacent fold walls are placed together and connected to each other.

10. The process according to claim 17, wherein the applying of the spacers includes applying an adhesive to the material, and curing the adhesive to form the spacers during and/or after the folding.

11. The process according to claim 9 or 10, wherein the applying step includes applying the adhesive with an applicator which changes the quantity of adhesive applied by varying the quantity of adhesive applied per unit of time.

12. The process according to one of claims 9 to 11, wherein the applying step includes making a number of applications of the adhesive one above the other on an area provided for forming the spacer material.

13. The process according to one of claims 9 to 11, wherein the applying step includes changing the quality of adhesive applied per unit of length by varying a relative speed between a length of material and an outlet opening of an applicator device.

## Revendications

1. Cartouche filtrante (1A ; lA' ; 1A'' ; 1B ; 1B' ; 1B'' ; 11A ; 11A' ; 11A'' ; 11B ; 11B' ; 11B'' ; 21) pour un filtre de fluide, ayant en particulier une forme extérieure de parallélépipède ou de cylindre creux, comprenant un nombre de parois de plis (5 ; 5' ; 5''; 15 ; 15' ; 15'' ; 25 ; 35) formées en pliage continu et en zigzag d'un matériau (2 ; 2' ; 12 ; 12'; 22) plane perméable au fluide, ayant des creux et/ou des élévations (3; 3a, 3b ; 3' ; 3'' ; 3a', 3b' ; 3a'', 3b'' ; 23a, 23b; 33a ; 33b) imprimés dans le plan d'une partie au moins des parois de plis pour le renforcement du pliage, des élévations des parois de plis adjacentes d'un pli respectif étant raccordées l'une à l'autre et étant en appui mutuel au moins par section,
**caractérisée en ce que**
dans les interstices des élévations, le long de l'entière extension longitudinale, des écarteurs rigides (6 ; 6a, 6b ; 6a', 6b' ; 6.2 ; 6.3 ; 6.2a, 6.3a, 6.2b, 6.3b ; 16 ; 16a, 16b ; 16 ; 16a', 16b' ; 16.1, 16.2 ; 16.1a, 16.1b ; 16.2a, 16.2b ; 16.la', 16.1b' ; 26a ; 36) sont prévus qui les raccordent et les maintiennent en appui mutuel,
la variation de hauteur nécessaire suivant la forme en zigzag de la section transversale des plis étant réalisée en direction de l'extension longitudinale des élévations par une variation de l'épaisseur desdits écarteurs.

2. Cartouche filtrante selon la revendication 1,
**caractérisée en ce que** les écarteurs sont formés par des agrégats de substance adhésive durcis.

3. Cartouche filtrante selon une des revendications précédentes,
**caractérisée en ce que** la hauteur des élévations en direction de leur extension longitudinale est essentiellement constante.

4. Cartouche filtrante selon la revendication 1 ou 2,
**caractérisée en ce que** la hauteur des élévations dans deux parois de plis qui sont en appui mutuel, diminue vers la direction du bord des plis raccordant lesdites parois de plis.

5. Cartouche filtrante selon la revendication 2 ou 4,
**caractérisée en ce que** les élevations comprennent une hauteur continuellement augmentant avec la distance des parois de plis en direction de son extension longitudinale, et donc dans une direction essentiellement perpendiculaire aux bords des plis du pliage au moins sur une première partie (l₂), et comprennent dans une deuxième partie (l₃) suivant ladite partie une hauteur (h) essentiellement constante.

6. Cartouche filtrante selon une des revendications précédentes,
**caractérisée en ce que** les élévations chacune commence immédiatement à un bord de pli.

7. Cartouche filtrante selon une des revendications 1 à 5,
**caractérisée en ce que** les élévations commencent à une distance prédéterminée (a) d'un bord de pli, comprenant une section (l₁) dans laquelle leur hauteur augmente plus qu'augmente la moitié de la distance des parois de plis.

8. Cartouche filtrante selon une des revendications précédentes,
**caractérisée en ce que** les parois de plis chacune comprend, de préférence dans un arrangement alternant, des élévations orientées vers les deux côtés, de manière à ce que les parois soient bilatéralement en appui contre les parois adjacentes.

9. Procédé pour fabriquer une cartouche filtrante selon une des revendications précédentes, dans lequel un pan du matériau perméable au fluide est pourvu d'impressions déterminant la position des bords des plis, et des creux et/ou élévations pour le renforcement du pliage sont imprimés dans le plan d'au moins une partie de parois de plis futures, et le pan de matériau est plié à l'endroit même des impressions formant les bords des plis
**caractérisé en ce que**
avant ou pendant le pliage, un matériau écarteur est appliqué sur au moins un/une des creux et/ou élévations faisant mutuellement face à la suite du pliage prédéterminé, les élevations de parois de plis adjacentes étant mises l'une contre l'autre et raccordées l'une à l'autre sur ledit matériau écarteur.

10. Procédé selon la revendication 9,
**caractérisé en ce que** l'application des écarteurs s'ensuit en tant qu'application d'une substance adhésive sur le pan de matériau et que pendant et/ou après le pliage un durcissement de la substance adhésive est effectué.

11. Procédé selon la revendication 9 ou 10,
**caractérisé en ce que** la quantité appliquée de la substance adhésive change selon la variation de la quantité de substance adhésive distribuée par unité de temps d'un dispositif d'application.

12. Procédé selon les revendications 9 à 11,
**caractérisé en ce que** sur la zone prévue pour la formation d'une couche de substance adhésive et dans une partie de son extension longitudinale, plusieurs applications de substance adhésive superposées sont effectuées.

13. Procédé selon les revendications 9 à 11,
**caractérisé en ce que** la quantité de substance adhésive appliquée par unité de longueur du matériau change selon la variation de la vitesse relative entre le pan du matériau et l'ouverture de sortie d'un dispositif d'application.
